# EUROPÄISCHE PATENTSCHRIFT

(11) **EP 2 884 638 B1**
(45) Veröffentlichungstag und Bekanntmachung des Hinweises auf die Patenterteilung: **26.05.2021**
(21) Anmeldenummer: 13196738.2
(22) Anmeldetag: 11.12.2013
(51) Int. Cl.: H02K 41/03, H02K 3/24, H02K 3/47, H02K 9/19

(54) **KÜHLKÖRPER FÜR EINEN LINEARMOTOR**
COOLING BODY FOR A LINEAR MOTOR
CORPS DE REFROIDISSEMENT POUR MOTEUR LINÉAIRE

(43) Veröffentlichungstag der Anmeldung: 17.06.2015
(73) Patentinhaber: ETEL S.A., 2112 Môtiers (CH)
(72) Erfinder: Da Conceição Rosa, André-Rafael, 2300 La Chaux-de-Fonds (CH)
(74) Vertreter: Maikowski & Ninnemann Patentanwälte Partnerschaft mbB

(56) Entgegenhaltungen:
- EP-A1- 0 868 012
- EP-A2- 2 424 087
- CN-A- 102 820 723
- US-A- 5 751 077
- US-A- 6 084 319
- US-A1- 2004 032 170
- US-A1- 2006 091 732
- US-B1- 6 278 203
- US-B1- 6 639 333

## Beschreibung

Die Erfindung betrifft einen Kühlkörper für das Primärteil eines Linearmotors nach dem Oberbegriff des Anspruchs 1 sowie einen Linearmotor mit einem solchen Kühlkörper gemäß Anspruch 13.

Derartige Kühlkörper sind beispielsweise aus der US 2004/0032170 A1 oder der CN 102 820 723 A bekannt.

Linearmotoren werden zunehmend eingesetzt, wenn es um eine hochgenaue und gegebenenfalls auch schnelle Positionierung von Objekten, wie zum Beispiel eines Maschinenteiles einer Werkzeugmaschine, geht. Dabei kann das Primärteil des Linearmotors über eine geeignete Schnittstelle unmittelbar mit dem zu bewegenden Maschinenteil oder sonstigem Objekt verbunden sein. Das heißt, im Gegensatz zu einem konventionellen Rotationsmotor entfällt hier die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen der mindestens einen am Primärteil vorgesehenen Spule kein Eisenkern zugeordnet ist. Hierdurch lassen sich störende Rastkräfte vermeiden. Es sind jedoch entsprechend größere Spulenströme erforderlich, um auch ohne Eisenkern hinreichend große Kräfte am Primärteil des Linearmotors erzeugen zu können. Dies erfordert wiederum eine entsprechend gute Kühlung der Spule (n) (nachfolgend auch allgemein als Spulenanordnung bezeichnet).

Bei einem eisenlosen Linearmotor kann der Kühlkörper zugleich als Aufnahme für die Spulenanordnung des Primärteiles dienen. Ein derartiger eisenloser Linearmotor ist beispielsweise aus der US 7,057,313 B2 bekannt.

In der US 6,278,203 B1; der US 5,751,007 A; der US 6,639,333 B1 und der US 6,084,319 A ist jeweils ein Gehäuse für einen Linearmotor beschrieben, in dem einerseits eine zu kühlende Spulenanordnung und andererseits ein hierfür verwendetes Kühlmittel aufgenommen sind. Und die EP 0 868 012 A1 beschreibt ein metallisches Gehäuse, das einerseits eine zu kühlende Spulenanordnung eines Linearmotors und andererseits Kühlkanäle enthält, welche mit einem Kühlmittel befüllt sind.

Aus der EP 2 424 087 A2 ist ein im Querschnitt U-förmiger Kühlkörper zur Aufnahme der Spulenanordnung eines Linearmotors bekannt. Die US 2006/0091732 A1 betrifft die Ausgestaltung eines eisenlosen Linearmotors und ein Verfahren zu dessen Herstellung.

Soll ein Linearmotor mit Kühlkörper in einem evakuierten Raum (das heißt, unter VakuumBedingungen) eingesetzt werden, so besteht die Schwierigkeit, dass übliche Spulenanordnungen, zum Beispiel aufgrund von Lufteinschlüssen zwischen den Windungen der Spulen oder wegen ausgasender Isolation, für einen Einsatz im Vakuum wenig geeignet sind.

Der Erfindung liegt das Problem zugrunde, die Einsetzbarkeit eines Linearmotors im Vakuum zu verbessern.

Dieses Problem wird erfindungsgemäß durch die Schaffung eines Kühlkörpers für einen Linearmotor mit den Merkmalen des Anspruchs 1 gelöst.

Danach ist bei einem Kühlkörper für das Primärteil eines Linearmotors, welcher durch einen umlaufenden äußeren Rand begrenzt wird und welcher zur Aufnahme der Spulenanordnung des Primärteils des Linearmotors ausgebildet ist, weiterhin vorgesehen, dass der Kühlkörper als ein einstückig geformtes Bauteil ausgeführt ist, an welchem mindestens ein entlang dessen äußerem Rand ringförmig umlaufender Befestigungsabschnitt angeformt ist. Dieser definiert wiederum einen umlaufenden Auflagebereich für Verschlussplatten, derart, dass bei bestimmungsgemäßer Anordnung der Verschlussplatten an jenem Auflagebereich ein durch den Kühlkörper, insbesondere dessen Befestigungsabschnitt, sowie durch die mindestens eine Verschlussplatte begrenzter Raum gebildet ist, in welchem die an dem Kühlkörper anzuordnenden Spule der Spulenanordnung bestimmungsgemäß aufgenommen werden. Ferner ist dabei der von dem Kühlkörper und der mindestens einen Verschlussplatte begrenzte Raum gasdicht verschlossen, so dass eine darin befindliche Spulenanordnung beim Einsatz des Linearmotors im Vakuum nicht mit der Umgebung in Wechselwirkung treten kann.

Dass der Befestigungsabschnitt entlang des äußeren Randes des Kühlkörpers umläuft, bedeutet dabei, dass sich der Befestigungsabschnitt nicht zwingend unmittelbar am Rand des Kühlkörpers erstrecken muss, sondern von diesem auch beabstandet sein kann. Dabei kann der Befestigungsabschnitt auch in mehrere Teilabschnitte unterteilt sind.

Konkret weist der entlang des äußeren Randes des Kühlkörpers ringförmig umlaufende Befestigungsabschnitt zwei einander abgewandte, umlaufende Auflagebereiche für jeweils eine Verschlussplatte auf, so dass bei bestimmungsgemäßer Anordnung je einer Verschlussplatte an jedem der beiden Auflagebereiche durch den Kühlkörper und die beiden Verschlussplatten zwei Räume begrenzt sind, in denen (beidseits des Kühlkörpers) jeweils ein Teil der Spulen einer Spulenanordnung aufgenommen werden kann.

Der (jeweilige) Auflagebereich am Befestigungsabschnitt ist stufig ausgeführt, wobei eine jeweilige Verschlussplatte bestimmungsgemäß auf eine Stufe des Auflagebereiches aufzulegen ist und sich dabei zusätzlich seitlich am Übergang zwischen zwei Stufen abstützen kann, um eine besonders dichte Verbindung zwischen einer jeweiligen Verschlussplatte und dem Befestigungsabschnitt des Kühlkörpers zu gewährleisten.

Zur Ausübung seiner Kühlfunktion bildet der Kühlkörper, insbesondere in einem als Kühlplatte ausgeführten Kühlbereich, Kanäle, die im Betrieb des Kühlkörpers von einem Kühlmittel durchströmt werden, und er kann weiterhin mindestens einen Einlass und mindestens einen Auslass für das Kühlmittel aufweisen.

Ein einstückig geformter Kühlkörper, der einen (plattenförmigen) Kühlkörper aufweist, lässt sich zum Beispiel durch so genannten 3D-Druck herstellen, also mittels eines 3D-Druckers, der den Kühlkörper aus einem oder mehreren fluiden oder pulverförmigen Werkstoffen mit bestimmten Maßen und Formen erzeugt. Es kommen aber auch andere Verfahren für die Herstellung eines einstückig geformten Kühlkörpers in Betracht, wie zum Beispiel das stoffschlüssige Verbinden, insbesondere Verschweißen, mindestens zweier Plattenteile (Plattenhälften), in die zuvor zur Bildung von Kanälen für das Kühlmittel Nuten eingebracht (zum Beispiel gefräst) wurden.

Das heißt, unter einem einstückig geformten Kühlkörper wird hier ein solcher verstanden, der als ein Bauteil in einem formgebenden Verfahren (ohne zusätzliche, nachträgliche Verbindungsschritte zwischen einzelnen Komponenten des Kühlkörpers) hergestellt worden ist oder bei dem allenfalls zusätzliche stoffschlüssige Verbindungen, zum Beispiel Schweißverbindungen, zwischen Komponenten des Kühlkörpers vorgesehen sind. Hierbei wird die erste Alternative, insbesondere in Form eines durch 3D-Druck hergestellten Kühlkörpers, als besonders vorteilhaft angesehen. Die maßgeblichen Komponenten eines Kühlkörpers, welche das einstückige Bauelement bilden, sind dabei diejenigen, die das Kühlmittel aufnehmen und in den Kühlkörper leiten, also insbesondere die Außenwände des Kühlkörpers und die im Kühlkörper ausgebildeten Kanäle für das Kühlmittel.

Als Material für den Kühlkörper eignet sich Titan, welches als Metall eine hohe Wärmeleitfähigkeit bei gleichzeitig vergleichsweise großem spezifischen Widerstand aufweist, welch Letzterer der Erzeugung von Wirbelströmen in dem Kühlkörper entgegenwirkt. Weitere geeignete Materialien sind beispielsweise Edelstahl oder (elektrisch isolierende, Wasser nicht absorbierende) keramische Werkstoffe, wie zum Beispiel in der US 7,057,313 B2 beschrieben.

Vorteilhaft sind nicht nur der Kühlmitteleinlass und der Kühlmittelauslass (zum Beispiel in Form einer Eintritts- bzw. Austrittsöffnung), sondern auch ein jeweils zugehöriger Anschlussbereich, über den eine Zuleitung bzw. eine Ableitung für das Kühlmittel an den Einlass bzw. Auslass anschließbar ist, einstückig an dem Kühlkörper angeformt. Auch kann an dem Kühlkörper ein elektrischer Anschluss der Spulenanordnung ausgebildet sein.

Weiterhin können an dem Kühlkörper Befestigungselemente einstückig angeformt sein, über welche die mindestens eine Spule des Primärteiles an dem Kühlkörper festlegbar ist. Die Befestigungselemente können beispielsweise als Rastelemente ausgebildet sein, über die sich eine jeweilige Spule an dem Kühlkörper verrasten lässt, oder auch als Befestigungsöffnungen. Neben einer Rastverbindung kommt insbesondere auch eine Schraubverbindung (gegebenenfalls unter Nutzung von Befestigungsöffnungen) für die Verbindung von Kühlkörper und einer jeweiligen Spule in Betracht. Durch eine definierte Festlegung der Spule(n) am Kühlkörper, insbesondere unter Erzeugung eines gewissen Anpressdruckes, kann ein definierter Wärmeübergang zwischen einer jeweils zu kühlenden Spule und dem Kühlkörper sichergestellt werden.

Der Kühlkörper kann so ausgestaltet sein, dass er einen dem mindestens einen Kühlmitteleinlass nachgeordneten Eingangsbereich aufweist, in welchen das über den Einlass zugeführte Kühlmittel zunächst einströmt. Von diesem Eingangsbereich können Kanäle abgehen, in welchen das Kühlmittel entlang der zu kühlenden Spule(n) des Primärteiles geführt wird. Die entlang des zu kühlenden Primärteiles geführten Kanäle münden wiederum in einen Ausgangsbereich des Kühlkörpers, aus welchem das (nunmehr erwärmte) Kühlmittel über den Kühlmittelauslass entnommen wird.

Der Eingangsbereich und der Ausgangsbereich des Kühlkörpers können beidseits der Kanäle für das Kühlmittel angeordnet sein, die sich dementsprechend jeweils vom Eingangsbereich zum Ausgangsbereich erstrecken. Das heißt, der Eingangs- und Ausgangsbereich des Kühlkörpers sind entlang der Erstreckungsrichtung der Kanäle voneinander beabstandet. Es ist aber auch ein derart schlaufenförmiger Verlauf der Kanäle für das Kühlmittel denkbar, das sich der Eingangsbereich und Ausgangsbereich des Kühlkörpers nebeneinander erstrecken. Hierbei kann ein nicht-wärmeleitendes Material zwischen dem Eingangs- und dem Ausgangsbereich des Kühlkörpers vorgesehen sein, um einen Wärmeaustausch zu vermeiden.

Gemäß einer Ausführungsform können der Eingangs- und/oder der Ausgangsbereich des Kühlkörpers als ein längserstreckter hohler Abschnitt ausgeführt sein, von welchem die Kanäle des Kühlkörpers (im Wesentlichen quer) abgehen bzw. in welchem die Kanäle des Kühlkörpers (im Wesentlichen quer) münden.

Vorteilhaft verlaufen entlang eines Spulenkörpers des Primärteiles jeweils mehrere Kanäle des Kühlkörpers, die sich nebeneinander erstrecken. Hierdurch lässt sich der Druckabfall entlang der Kanäle begrenzen.

Zur Reduzierung des Druckabfalls entlang der Strömungsrichtung des Kühlmittels sind weiterhin Kanäle und sonstige Bereiche des Kühlkörpers vorteilhaft so ausgestaltet, dass Hindernisse im Strömungsweg sowie Kurven mit geringen Radien möglichst vermieden werden.

Jeweils ein Kanal oder mehrere Kanäle können dabei einen Kühlabschnitt bilden, der zur Kühlung jeweils einer Spule der Spulenanordnung dient.

Am Kühlkörper, insbesondere zwischen einzelnen Kühlabschnitten des Kühlkörpers und somit innerhalb des von dem Befestigungsabschnitt umschlossenen Gebietes, können Stütz- bzw. Verstärkungsbereiche, insbesondere in Form von Rippen, vorgesehen (einstückig geformt) sein, an denen sich die Verschlussplatten bei bestimmungsgemäßer Anordnung an einer Auflagefläche des Befestigungsabschnittes jeweils zusätzlich abstützen und an denen eine Verschlussplatte - zusätzlich zu der Befestigung an einer Auflagefläche des Befestigungsabschnittes - fixiert sein kann.

Eine jeweilige Verschlussplatte, welche bestimmungsgemäß am Kühlkörper anzuordnen und zu befestigen ist, kann beispielsweise aus Metall bestehen. Vorteilhaft wird für den Kühlkörper einerseits und die mindestens eine zugehörige Verschlussplatte andererseits dasselbe Material verwendet. Es ist jedoch auch die Verwendung unterschiedlicher Materialien denkbar.

Die Verschlussplatten sind dabei stoffschlüssig, insbesondere durch Schweißen bzw. konkret durch Laserschweißen, an einem jeweiligen Auflagebereich des Befestigungsabschnittes fixiert und können an den Stütz- bzw. Verstärkungsbereichen fixiert sein.

Ein Linearmotor mit einem erfindungsgemäßen Kühlkörper ist durch die Merkmale des Anspruchs 13 charakterisiert.

Weitere Einzelheiten und Vorteile der Erfindung werden bei der nachfolgenden Beschreibung eines Ausführungsbeispiels anhand der Figuren deutlich werden.

Es zeigen:
- Figur 1: eine perspektivische Darstellung eines Kühlkörpers eines Primärteiles für einen Linearmotor;
- Figur 1A: ein Detail aus Figur 1 im Querschnitt;
- Figur 2: eine Draufsicht auf den Kühlkörper aus Figur 1 mit zusätzlich angedeuteten Verläufen von Kanälen innerhalb des Kühlkörpers;
- Figur 3A: den Kühlkörper aus Figur 1 zusammen mit zwei hieran zu befestigenden Verschlussplatten;
- Figur 3B: die Anordnung gemäß Figur 3A nach Befestigung der Verschlussplatten am Kühlkörper;
- Figur 4: eine schematische Darstellung eines Kühlkörpers zusammen mit einer Spulenanordnung eines Primärteiles eines Linearmotors.

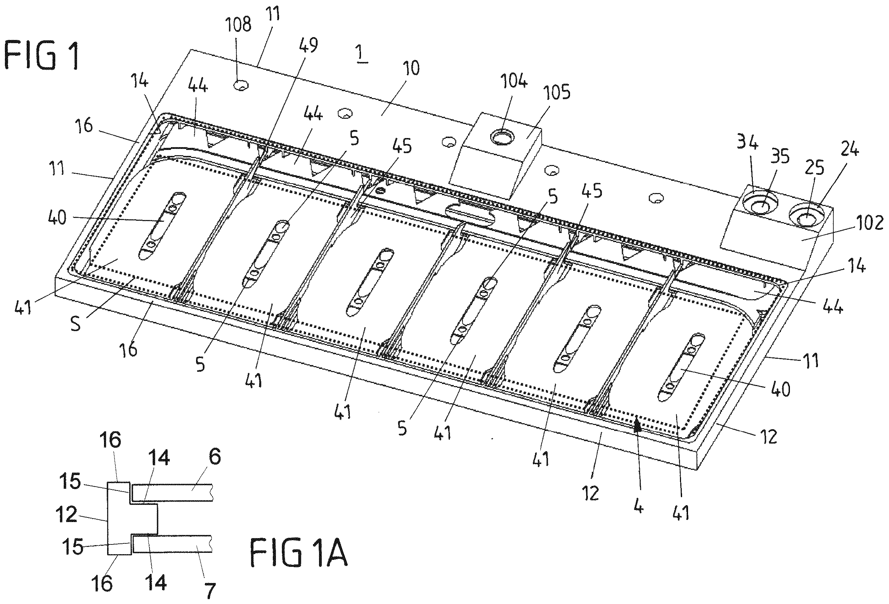

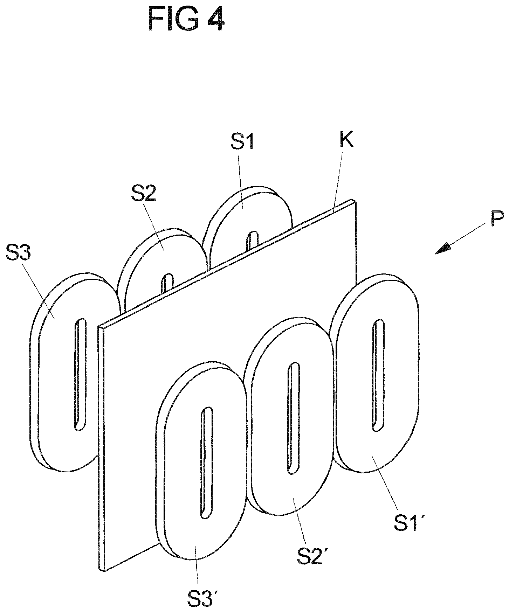

Figur 4 zeigt zur Illustration des technischen Hintergrundes des nachfolgend anhand der Figuren 1 bis 3B beschriebenen Ausführungsbeispiels eine Kühlplatte K, an der (beidseits, was jedoch nicht zwingend ist, oder nur einseitig) Spulen S1, S2, S3 bzw. S1', S2', S3' eines Primärteiles P eines Linearmotors angeordnet sind. Die flächigen Spulen S1, S2, S3; S1', S2', S3' bestehen jeweils aus einem Draht, z. B. Kupferdraht, der um eine zentrale Öffnung der jeweiligen Spule gewickelt ist. Die Wicklung der Spulen erfolgt vorteilhaft in der Weise, dass zwar viele Drähte flächig in einer Ebene nebeneinander liegen, aber nur eine oder wenige Lagen solcher Windungen senkrecht zur Spulenebene gebildet sind. Eine solche Spulenform führt einerseits zu einem flachen Aufbau des Primärteils und ermöglicht andererseits einen großflächigen Kontakt mit dem - ebenfalls flächigen - Kühlkörper K in Form einer Kühlplatte.

Der Kühlkörper K weist in seinem Inneren Kühlkanäle auf, durch die hindurch im Betrieb des entsprechenden Motors eine Kühlmittel, insbesondere in Form einer Kühlflüssigkeit, strömt, um die Spulen S1, S2, S3; S1', S2', S3' zu kühlen, also insbesondere eine zu starke Erwärmung der Spulen als Folge des im Motorbetrieb durch die Spulen fließenden Stromes zu vermeiden. Da es sich bei dem in Figur 4 dargestellten Primärteil um ein sogenanntes eisenloses Primärteil handelt, übernimmt der Kühlkörper K weiterhin die Funktion der Aufnahme der Spulen S1, S2, S3; S1', S2', S3'.

Figur 1 zeigt in perspektivischer Darstellung einen Kühlkörper 1, der zur Kühlung der Spulen eines Primärteiles eines (eisenlosen) Linearmotors dient, wobei in Figur 1 eine Spulenanordnung S schematisch mit gestrichelten Linien angedeutet ist. Hinsichtlich eines möglichen Aufbaus der Spulenanordnung S sei beispielhaft auf die vorstehend erläuterte Figur 4 verwiesen.

Gemäß Figur 1 handelt es sich bei dem Kühlkörper 1 um ein einzelnes, einstückig geformtes Bauteil. Als Material für den Kühlkörper 1 eignet sich ein Metall mit guter Wärmeleitfähigkeit bei gleichzeitig vergleichsweise hohem spezifischem elektrischem Widerstand, wie z. B. Titan oder Edelstahl. Eine hinreichende Wärmeleitfähigkeit des Kühlkörpers gewährleistet die Ableitung der im Betrieb der Spulenanordnung S erzeugte Wärme in ein im Kühlkörper 1 befindliches Kühlmittel; und ein hinreichend großer spezifischer Widerstand wirkt der Entstehung von Wirbelströmen in dem Kühlkörper 1 entgegen.

Zur Herstellung des einstückig geformten Kühlkörpers 1, insbesondere aus Metall, eignet sich beispielsweise das 3D-Drucken. Eine alternative Möglichkeit für die Herstellung ist etwa das Verschweißen mindestens zweier Plattenteile (Plattenhälften), in die zuvor zur Bildung von Kanälen für das Kühlmittel Nuten eingebracht (z. B. gefräst) wurden.

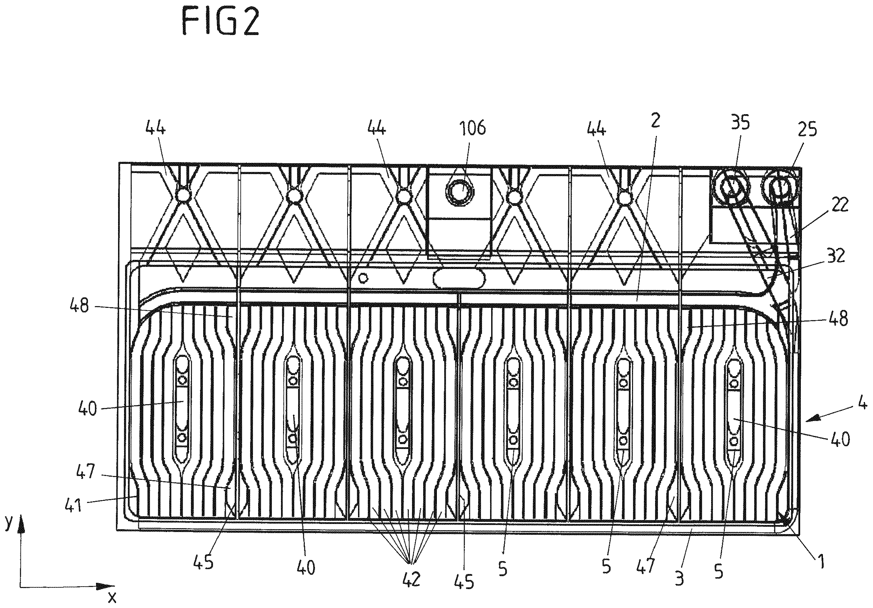

Der Kühlkörper 1 weist im Ausführungsbeispiel als einen zentralen Bestandteil eine Kühlplatte 4 auf, um einerseits die Bauhöhe des Primärteiles zu minimieren und um andererseits einen möglichst großflächigen Kontakt mit der Spulenanordnung S des Primärteiles zu ermöglichen. In dem Kühlkörper 1 verlaufen Kanäle für das Kühlmittel, die nachfolgend anhand Figur 2 noch näher beschrieben werden und die der definierten Leitung eines in den Kühlkörper eingelassenen Kühlmittels, insbesondere einer Kühlflüssigkeit, entlang der Spulenanordnung S dienen.

Wie anhand einer Zusammenschau der Figuren 1 und 2 erkennbar, weist der Kühlkörper 1 einen Kühlmitteleinlass 25 und einen Kühlmittelauslass 35 auf. Sowohl der Kühlmitteleinlass 25 als auch der Kühlmittelauslass 35 sind dabei jeweils einstückig am Kühlkörper 1 angeformt. Konkret sind der Einlass 25 und der Auslass 35 jeweils an einem einstückig am Kühlkörper 1 angeformten Kühlmittelanschluss 102 ausgebildet. Dieser definiert Anschlussbereiche 24, 34, von denen der eine dem Kühlmitteleinlass 25 und der andere dem Kühlmittelauslass 35 zugeordnet ist. Der dem Kühlmitteleinlass 25 zugeordnete Anschlussbereich 24 dient dabei zum Anschluss einer Zuleitung für ein Kühlmittel; und der dem Kühlmittelauslass 35 zugeordnete Anschlussbereich 34 dient dem Anschluss einer Ableitung für das Kühlmittel.

Wie insbesondere anhand Figur 2 deutlich wird, ist der Kühlmitteleinlass 25 über einen Verbindungskanal 22 mit einem Eingangsbereich 2 des Kühlkörpers 1 strömungsverbunden. Der Eingangsbereich 2 verläuft dabei (längserstreckt) neben der Spulenanordnung S des Primärteiles. Weiterhin ist der Kühlmittelauslass 35 über einen Verbindungskanal 32 mit einem Ausgangsbereich 3 des Kühlkörpers 1 strömungsverbunden. Der Ausgangsbereich 3 verläuft ebenfalls (längserstreckt) neben der Spulenanordnung S des Primärteiles, jedoch auf einer dem Eingangsbereich 2 abgewandten Seite der Spulenanordnung S.

Von dem Eingangsbereich 2 stehen seitlich mehrere Kühlabschnitte 41 des Kühlkörpers 1 ab, die zur Kühlung der einzelnen Spulen der Spulenanordnung S dienen und die im Ausführungsbeispiel eine Kühlplatte bilden. Die Kühlabschnitte 41 sind dabei in der Ebene des Kühlkörpers 1, also in der von dem Kühlbereich 4 in Form einer Kühlplatte aufgespannten xy-Ebene, nebeneinander angeordnet.

Von dem Eingangsbereich 2 aus kann somit das (über den Kühlmitteleinlass 25 eingelassene) Kühlmittel in die seitlich hiervon abstehenden Kühlabschnitte 41 des (plattenförmigen) Kühlbereichs 4 gelangen, an welchem die Spulen der Spulenanordnung S (einseitig oder beidseitig), vergleiche Figur 4, anliegen. Die von dem Eingangsbereich 2 des Kühlkörpers abstehenden Kühlabschnitte 41 sind jeweils flächig ausgebildet und umschließen jeweils eine Öffnung 40. Jeder dieser Kühlabschnitte 41 ist zur Kühlung einer Spule oder zweier einander gegenüberliegender Spulen des Primärteiles vorgesehen, welche an dem jeweils zugeordneten Kühlabschnitt 41 anzuordnen ist/sind.

Zur Befestigung der Spulen an dem Kühlkörper 1 bzw. an einem jeweiligen Kühlabschnitt 41 dienen am Kühlkörper 1 bzw. genauer an den Kühlabschnitten 41 (und dort jeweils innerhalb der zugehörigen Öffnung 40) angeformte Befestigungselemente 5. Vorteilhaft erfolgt eine Befestigung der einzelnen Spulen an dem Kühlkörper 1 bzw. an dem jeweiligen Kühlabschnitt 41 mit einem gewissen Anpressdruck, um den Wärmeübertrag zwischen dem Kühlkörper zu optimieren. Im Ausführungsbeispiel weisen die Befestigungselemente 5 jeweils eine Befestigungsöffnung auf, die eine Befestigung einer jeweiligen Spule mittels einer hierin eingreifenden Schraube oder mittels eines hierin eingreifenden Rastelementes ermöglicht. Alternativ können die Befestigungselemente 5 Rasthaken umfassen, die entsprechende Rastabschnitte an einer zu befestigenden Spule hinter- bzw. umgreifen.

Zur Bestromung am Kühlkörper 1 angeordneter Spulen ist am Kühlkörper ein Anschlussstück 105 mit einer Schnittstelle 104 angeformt, an welcher ein elektrischer Stecker anordenbar ist, z. B. indem der elektrische Stecker an der Schnittstelle 104 des Anschlussstückes 105 durch Schweißen befestigt wird.

In der Draufsicht gemäß Figur 2 ist der Kühlkörper 1, und insbesondere dessen Kühlbereich 4, teilweise durchscheinend dargestellt, so dass die innerhalb des Kühlkörpers 1 gebildeten Kanäle sichtbar werden. Danach bildet jeder der Kühlabschnbitte 41 mehrere (acht) Kanäle 42. Diese erstrecken sich beidseits der zentralen Öffnung 40 des jeweiligen Kühlabschnittes 41 und sind jeweils quer zu ihrer Erstreckungsrichtung nebeneinander angeordnet. Jeder der Kanäle 42 geht dabei von dem Eingangsbereich 2 des Kühlkörpers ab, erstreckt sich in Richtung auf den Ausgangsbereich 3 und mündet in diesem. Durch die Unterteilung eines jeweiligen Kühlabschnittes 41 in eine Mehrzahl nebeneinander verlaufender Kanäle 42 wird der Druckabfall innerhalb einer jeweiligen Kühlabschnittes 41 reduziert. Außerdem wird durch die Ausgestaltung der Kühlabschnitte 41 eine Optimierung des Wärmeaustausches mit der jeweils zugeordneten Spule angestrebt.

Im Betrieb des in den Figuren 1 und 2 dargestellten Kühlkörpers zum Kühlen einer Spulenanordnung S des Primärteiles eines Linearmotors ist an den einen, eingangsseitigen Anschlussbereich 24 des Kühlkörpers eine Zuleitung angeschlossen, mittels welcher dem Kühlkörper 1 über den am eingangsseitigen Anschlussbereich 24 gebildeten Kühlmitteleinlass 25 ein Kühlmittel, insbesondere eine Kühlflüssigkeit, z. B. in Form von Wasser, gegebenenfalls gemischt mit Glykol, zugeführt wird. Dieses strömt sodann über den Verbindungskanal 22 in den Eingangsbereich 2 des Kühlkörpers, der sich im Ausführungsbeispiel entlang einer ersten Richtung x erstreckt. Aus dem Eingangsbereich 2 gelangt das Kühlmittel in die seitlich hiervon abstehenden Kühlabschnitte 41, genauer in deren einzelne Kanäle 42, welche in den Kühlabschnitten 41 jeweils ausgebildet sind. Die Kanäle gehen dabei jeweils im Wesentlichen senkrecht (entlang einer zweiten Richtung y) von dem (entlang einer ersten Richtung x erstreckten) Eingangsbereich 2 ab. Sie erstrecken sich dann, wie bereits beschrieben, innerhalb eines jeweiligen Kühlabschnittes 41 nebeneinander verlaufend, beidseits der zentralen Öffnung 40 des jeweiligen Kühlabschnittes 41 und münden, wiederum im Wesentlichen senkrecht (entlang der zweiten Richtung y), in den Ausgangsbereich 3 des Kühlkörpers 1. Letzterer erstreckt sich im Ausführungsbeispiel parallel zu dem Eingangsbereich 2 entlang der ersten Richtung x, und zwar auf der anderen, gegenüberliegenden Seite des Kühlbereiches 4.

In dem Ausgangsbereich 3 strömt das aus den Kühlabschnitten 41 bzw. deren Kanälen 42 stammende Kühlmittel sodann entlang der ersten Richtung x zunächst zu dem Verbindungskanal 32 und durch diesen hindurch zum Kühlmittelauslass 35, wo das Kühlmittel über eine an den entsprechenden Anschlussbereich 34 angeschlossene Ableitung entnommen werden kann. Der Kühlmittelauslass 35 ist dabei an dem Kühlkörper 1 neben dem Einlassbereich 25 angeordnet, und zwar im Ausführungsbeispiel an einem gemeinsamen Kühlmittelanschluss 102 ausgebildet.

Zusammenfassend wird ein Kühlmittel in den Kühlkörper 1 zunächst über dessen Kühlmitteleinlass 25 in den Eingangsbereich 2 eingeleitet, aus welchem es in die Kanäle 42 der seitlich vom Eingangsbereich 2 abstehenden Kühlabschnitte 41 strömt, wo das Kühlmittel zur Kühlung der Spulenanordnung S des Primärteiles genutzt wird. Aus den Kühlabschnitten 41 gelangt das Kühlmittel in den Ausgangsbereich 3 des Kühlkörpers, welcher sich (entlang einer ersten Richtung x) im Wesentlichen parallel zum Eingangsbereich 2 erstreckt, dabei jedoch (quer zur ersten Richtung x) von dem Eingangsbereich 2 beabstandet ist. Hierdurch tritt das Kühlmittel, welches sich zuvor in den Kühlabschnitten 41 erwärmt hat, nicht in wärmeleitendem Kontakt mit dem noch im Eingangsbereich 2 befindlichen Kühlmittel. Das Kühlmittel verlässt den Ausgangsbereich 3 schließlich über den Kühlmittelauslass 35, welcher im Ausführungsbeispiel neben dem Kühlmitteleinlass 25 angeordnet ist.

Die Strömungswege in dem Kühlkörper 1, insbesondere auch die Kanäle 42 in den Kühlabschnitten 41, sind dabei so ausgeführt, dass Hindernisse im Strömungsweg des Kühlmittels sowie Kurvenbahnen mit großer Krümmung (d. h., geringem Krümmungsradius) vermieden werden. Hierdurch wird der Druckabfall des Kühlmittels entlang seines Strömungsweges minimiert.

Bei der Herstellung eines einstückig geformten Kühlkörpers, wie in den Figuren 1 und 2 dargestellt, werden die Herstellungskosten wesentlich durch die Materialkosten mitbestimmt. Um diese zu reduzieren, ist daher der Kühlkörper 1 möglichst dünnwandig ausgeführt. Weiterhin wird Material nur an solchen Stellen des Kühlkörpers eingesetzt, wo dies tatsächlich erforderlich ist. Bereiche 47, 48 zwischen den einzelnen Kühlabschnitten 41 bleiben daher beispielsweise frei.

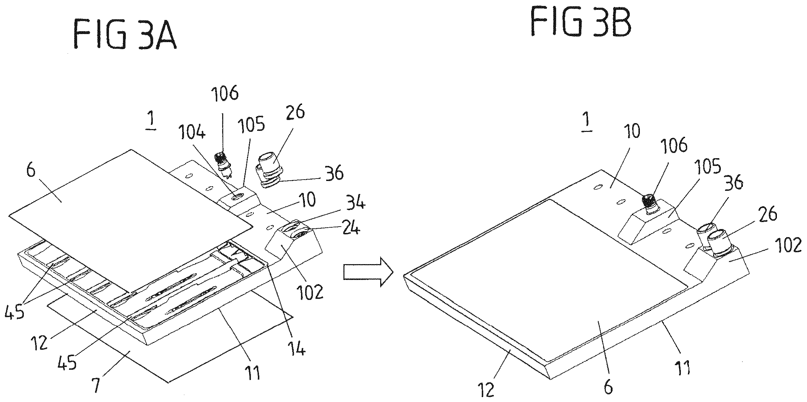

Wie anhand der Figuren 1 und 2 erkennbar, verlaufen zwischen einzelnen Kühlabschnitten 41 des Kühlkörpers 1 jeweils Stütz- bzw. Verstärkungsbereiche 45, im Ausführungsbeispiel in Form von Rippen, über welche benachbarte Kühlabschnitte 41 abschnittsweise miteinander verbunden sind. Eine Funktion dieser Verstärkungs- bzw. Stützbereiche wird weiter unten anhand der Figuren 3A und 3B näher beschrieben werden.

Gemäß den Figuren 1 und 2 sowie dem in Figur 1A gezeigten Querschnitt eines Details der Figur 1 wird der Kühlkörper 1 durch einen umlaufenden äußeren Rand 11 begrenzt. Dieser erstreckt sich entlang einer Ebene (xy-Ebene), welche durch den Kühlkörper 1 bzw. dessen plattenförmigen Kühlbereich 4 aufgespannt ist.

Entlang des umlaufenden äußeren Randes 11, jedoch nicht zwingend an diesem, verläuft ein Befestigungsabschnitt 12 des Kühlkörpers 1. Im Ausführungsbeispiel der Figuren 1 und 2 verläuft der Befestigungsabschnitt 12 abschnittsweise unmittelbar am Rand 11 des Kühlkörpers 1 und ist andererseits abschnittsweise von diesem beabstandet. In dem Teil des Kühlkörpers 1, in welchem der Befestigungsabschnitt 12 von dem äußeren Rand 11 des Kühlkörpers beabstandet ist, ist zwischen dem äußeren Rand 11 und dem Befestigungsabschnitt 12 ein Trägerbereich 10 ausgebildet, an dem unter anderem der Kühlmitteleinlass 25, der Kühlmittelauslass 35 und die Schnittstelle 104 für einen elektrischen Stecker vorgesehen sind. Außerdem sind an jenem Trägerbereich 10 Befestigungsstellen 108, z. B. in Form von Befestigungsöffnungen ausgebildet, über die der Kühlkörper 1 und damit auch eine hieran angeordnete Spulenanordnung, an einem zugeordneten Objekt, wie etwa einem Maschinenteil, befestigbar sind.

Außerdem ist in der Umgebung des Trägerbereiches 10 der (die Kühlabschnitte 41 aufweisende) plattenförmige Kühlbereich 4 über Verstärkungs- bzw. Versteifungsstreben 44 mit dem äußeren Rand 11 des Kühlkörpers 1 verbunden.

Der Befestigungsabschnitt 12 des Kühlkörpers 1 steht (senkrecht zur Erstreckungsebene xy des Kühlkörpers 1) beidseits über den plattenförmigen Kühlbereich 4 des Kühlkörpers 1 hinaus und bildet an seinen freien Enden jeweils einen abgestuften Endbereich 14, 15, 16, vergleiche Figur 1A. Eine Stufe 14 bildet dabei einen Auflagebereich für jeweils eine Verschlussplatte 6, 7. Die Verschlussplatten 6, 7 können aus Metall bestehen und insbesondere aus demselben Material wie der Kühlkörper 1.

Wie anhand der Figuren 1A, 3A und 3B erkennbar, kann durch Anlegen und Befestigen je einer Verschlussplatte 6, 7 an den beiden Auflagebereichen 14 des Kühlkörpers 1 ein durch jene Verschlussplatten 6, 7 und den Kühlkörper 1 (insbesondere auch durch dessen Befestigungsabschnitt 12) umschlossener Raum gebildet werden, in welchem die Spulen der am Kühlbereich befestigten Spulenanordnung S aufgenommen sind, vergleiche Figuren 1 und 4, aufgenommen sind. Indem die jeweilige Verschlussplatte 6, 7 gasdicht, z. B. durch Schweißen, insbesondere Laserschweißen an dem jeweils zugehörigen Auflagebereich 14 des Befestigungsabschnittes 12 fixiert wird, lässt sich der von dem Kühlkörper 1 und den Verschlussplatten 6, 7 umgrenzte Innenraum, in welchem die Spulenanordnung S aufgenommen ist, gasdicht verschließen. Dies ist besonders vorteilhaft für einen Einsatz der Anordnung im evakuierten Räumen (Vakuum), da die Spulenanordnung S hierdurch gegenüber der Umgebung (Vakuum) isoliert ist und insbesondere keine Ausgasungen in die Umgebung gelangen können. Das Laserschweißen kann dabei durch die jeweilige Verschlussplatte 6, 7 hindurch erfolgen.

Besonders zuverlässig kann eine (gasdichte) Verbindung zwischen den Verschlussplatten 6, 7 und dem Befestigungsabschnitt 12 gewährleistet werden, wenn die Verschlussplatten 6, 7 nicht nur jeweils an der zugeordneten Auflagefläche 14 anliegen, sondern sich darüber hinaus seitlich am Übergang 15 zu einer nächsten Stufe 16 des Befestigungsabschnittes 12 abstützen. Der Übergangsbereich 15 kann dabei zur Erzeugung einer Keilwirkung geneigt ausgeführt sein.

Für eine maximale Stabilität der Anordnung können sich die Verschlussplatten 6, 7 außerdem an den (im Ausführungsbeispiel durch Rippen gebildeten) Stütz- bzw. Verstärkungsbereichen 45 zwischen den Kühlabschnitten 41 abstützen und auch an diesen befestigt, insbesondere verschweißt sein.

Ferner wird anhand der Figuren 3A und 3B deutlich, dass an den Anschlussbereichen 24, 34 des Kühlkörpers 1 jeweils ein Anschlussstück 26 bzw. 36 für einen Kühlmitteschlauch angeordnet und (durch Schweißen, insbesondere Laserschweißen) befestigt wird, mittels derer einerseits dem Kühlmitteleinlass 25 ein Kühlmittel zuführbar ist und mittels derer andererseits das (zwischenzeitlich erwärmte) Kühlmittel über den Kühlmittelauslass 35 wieder entnehmbar ist.

Weiterhin kann an der elektrischen Schnittstelle 104 ein elektrischer Stecker 106 angeordnet und (wiederum durch Schweißen, insbesondere Laserschweißen) fixiert werden.

## Patentansprüche

1. Kühlkörper mit Verschlussplatten für ein Primärteil eines Linearmotors, das eine Spulenanordnung (S) mit mindestens einer im Betrieb des Motors zu bestromenden Spule umfasst, wobei der Kühlkörper (1) durch einen umlaufenden äußeren Rand (11) begrenzt ist, der sich entlang einer durch einen plattenförmigen Kühlbereich (4) des Kühlkörpers (1) aufgespannten Ebene erstreckt, wobei der Kühlkörper (1) zur Aufnahme der Spulenanordnung (S) des Primärteiles ausgebildet ist und wobei der Kühlkörper (1) als ein einstückig geformtes Bauteil ausgeführt ist, in dem sich ein Kühlmittel befindet und in dem Kanäle (42) für das Kühlmittel verlaufen, die der Leitung eines in den Kühlkörper (1) eingelassenen Kühlmittels entlang der Spulenanordnung (S) dienen, wobei an dem Kühlkörper (1) ein entlang des äußeren Randes (11) umlaufender Befestigungsabschnitt (12) angeformt ist,
**dadurch gekennzeichnet,**
**dass** der Befestigungsabschnitt (12) zwei einander abgewandte Auflagebereiche (14) zum Anlegen jeweils einer Verschlussplatte (6, 7) definiert, die jeweils durch eine Stufe eines abgestuften Endbereiches (14, 15, 16) des Befestigungsabschnittes (12) gebildet werden, derart, dass bei bestimmungsgemäßer Anordnung einer Verschlussplatte (6, 7) an dem jeweiligen Auflagebereich (14) des Befestigungsabschnittes (12) ein durch den Kühlkörper (1) und die Verschlussplatten (6, 7) begrenzter Raum gebildet ist, in welchem die Spulenanordnung (S) aufzunehmen ist, wobei die Verschlussplatten (6, 7) nicht nur an der jeweils zugeordneten Auflagefläche (14) anliegen, sondern sich darüber hinaus seitlich am Übergang (15) zur nächsten Stufe (16) des Befestigungsabschnittes (12) abstützen, und wobei die Verschlussplatten (6, 7) stoffschlüssig an dem jeweiligen Auflagebereich (14) des Befestigungsabschnitts (12) befestigt sind, so dass der Kühlkörper (1) und die Verschlussplatten (6, 7) einen gasdicht verschlossenen Raum zur Aufnahme der Spulenanordnung (S) bilden, in welchem die Spulenanordnung (S) gegenüber der Umgebung isoliert ist und keine Ausgasungen in die Umgebung gelangen können.

2. Kühlkörper nach einem der vorhergehenden Ansprüche, **dadurch gekennzeichnet, dass** der Kühlkörper (1) mindestens einen Einlass (25) sowie mindestens einen Auslass (35) für das Kühlmittel aufweist.

3. Kühlkörper nach Anspruch 2, **dadurch gekennzeichnet, dass** im Bereich des Kühlmitteleinlasses (25) und im Bereich des Kühlmittelauslasses (35) jeweils ein Anschlusselement (26, 36) stoffschlüssig an dem Kühlkörper (1) befestigt ist, über welches eine Zuleitung für das Kühlmittel oder eine Ableitung für das Kühlmittel anschließbar ist.

4. Kühlkörper nach Anspruch 2 oder 3, **dadurch gekennzeichnet, dass** die Kanäle (41) jeweils mit einem ersten Endabschnitt senkrecht von einem Eingangsbereich (2) des Kühlkörpers (1) abgehen und mit einem zweiten Endabschnitt senkrecht in einen Ausgangsbereich (3) des Kühlkörpers (1) münden.

5. Kühlkörper nach einem der vorhergehenden Ansprüche, **dadurch gekennzeichnet, dass** der Kühlkörper (1) einstückig durch 3D-Druck hergestellt ist.

6. Kühlkörper nach einem der vorhergehenden Ansprüche, **dadurch gekennzeichnet, dass** der Kühlkörper (1) aus Metall besteht.

7. Kühlkörper nach Anspruch 6, **dadurch gekennzeichnet, dass** der Kühlkörper (1) aus Titan oder Edelstahl besteht.

8. Kühlkörper nach einem der vorhergehenden Ansprüche, **dadurch gekennzeichnet, dass** an dem Kühlkörper (1) Befestigungselemente (5) zur Festlegung einer Spulenanordnung (S) an dem Kühlkörper (1) angeformt sind.

9. Kühlkörper nach einem der vorhergehenden Ansprüche, **dadurch gekennzeichnet, dass** sich an dem Kühlkörper (1), innerhalb des von dem umlaufenden Befestigungsabschnitt (12) umschlossenen Gebietes, Verstärkungsbereiche (45) des Kühlkörpers (1) erstrecken.

10. Kühlkörper nach Anspruch 9, **dadurch gekennzeichnet, dass** sich die jeweilige Verschlussplatte (6, 7) an den Verstärkungsbereichen (45) abstützt und stoffschlüssig hieran fixiert ist.

11. Kühlkörper nach einem der vorhergehenden Ansprüche, **dadurch gekennzeichnet, dass** die jeweilige Verschlussplatte (6, 7) durch Schweißen an dem Kühlkörper (1) befestigt ist.

12. Kühlkörper nach einem der vorhergehenden Ansprüche, **dadurch gekennzeichnet, dass** die jeweilige Verschlussplatte (6, 7) aus Metall besteht.

13. Linearmotor mit einem Primärteil, das eine Spulenanordnung (S) mit mindestens einer im Betrieb des Linearmotors elektrisch zu bestromenden Spule aufweist und das weiterhin einen Kühlkörper nach einem der vorhergehenden Ansprüche umfasst, an welchem die Spulenanordnung (S) derart festgelegt ist, dass sie in einem von dem Kühlkörper (1) und den Verschlussplatten (6, 7) umschlossenen Raum aufgenommen ist.

## Claims

1. A cooling body with closure plates for a primary part of a linear motor, which comprises a coil assembly (S) with at least one coil to be energized in operation of the motor, wherein the cooling body (1) is delimited by a circumferential outer edge (11) that extends along a plane defined by a plate-shaped cooling region (4) of the cooling body (1), wherein the cooling body (1) is configured to receive the coil assembly (S) of the primary part and wherein the cooling body (1) is configured as an integrally formed component in which a coolant is disposed and in which channels (42) for the coolant extend, which serve to conduct a coolant introduced into the cooling body (1) along the coil assembly (S), wherein a circumferential fastening portion (12) extending along the outer edge (11) is integrally molded to the cooling body (1),
**characterized in**
**that** the fastening portion (12) defines two bearing regions (14) facing away from each other for applying one closure plate (6, 7) each, which are each formed by a step of a stepped end region (14, 15, 16) of the fastening portion (12), in such a way that when a closure plate (6, 7) is properly arranged on the respective bearing region (14) of the fastening portion (12), a space delimited by the cooling body (1) and the closure plates (6, 7) is formed, in which the coil assembly (S) is to be received, wherein the closure plates (6, 7) not only rest against the respectively associated bearing surface (14), but also are supported laterally at the transition (15) to the next step (16) of the fastening portion (12), and wherein the closure plates (6, 7) are cohesively attached to the respective bearing region (14) of the fastening portion (12) so that the cooling body (1) and the closure plates (6, 7) form a gas-tightly sealed space for receiving the coil assembly (S), in which the coil assembly (S) is insulated from the environment and no outgassings can get into the environment.

2. The cooling body according to any of the preceding claims, **characterized in that** the cooling body (1) includes at least one inlet (25) and at least one outlet (35) for the coolant.

3. The cooling body according to claim 2, **characterized in that** in the region of the coolant inlet (25) and in the region of the coolant outlet (35) one connecting element (26, 36) each is cohesively attached to the cooling body (1), via which a supply line for the coolant or a discharge line for the coolant can be connected.

4. The cooling body according to claim 2 or 3, **characterized in that** the channels (41) each with a first end portion perpendicularly extend from an inlet region (2) of the cooling body (1) and with a second end portion perpendicularly open into an outlet region (3) of the cooling body (1).

5. The cooling body according to any of the preceding claims, **characterized in that** the cooling body (1) is made in one piece by 3D printing.

6. The cooling body according to any of the preceding claims, **characterized in that** the cooling body (1) is made of metal.

7. The cooling body according to claim 6, **characterized in that** the cooling body (1) is made of titanium or stainless steel.

8. The cooling body according to any of the preceding claims, **characterized in that** fastening elements (5) for fixing a coil assembly (S) to the cooling body (1) are integrally molded to the cooling body (1).

9. The cooling body according to any of the preceding claims, **characterized in that** reinforcing regions (45) of the cooling body (1) extend on the cooling body (1), within the area enclosed by the circumferential fastening portion (12).

10. The cooling body according to claim 9, **characterized in that** the respective closure plate (6, 7) is supported on the reinforcing regions (45) and is cohesively fixed thereto.

11. The cooling body according to any of the preceding claims, **characterized in that** the respective closure plate (6, 7) is attached to the cooling body (1) by welding.

12. The cooling body according to any of the preceding claims, **characterized in that** the respective closure plate (6, 7) is made of metal.

13. A linear motor with a primary part which includes a coil assembly (S) with at least one coil to be energized electrically in operation of the linear motor, and which furthermore comprises a cooling body according to any of the preceding claims, to which the coil assembly (S) is fixed in such a way that it is received in a space enclosed by the cooling body (1) and the closure plates (6, 7).

## Revendications

1. Corps de refroidissement avec plaques de fermeture pour une partie primaire d'un moteur linéaire, partie primaire qui comprend un ensemble de bobines (S) avec au moins une bobine à alimenter en courant pendant le fonctionnement du moteur, le corps de refroidissement (1) étant délimité par un bord extérieur circonférentiel (11), qui s'étend le long d'un plan défini par une région de refroidissement en forme de plaque (4) du corps de refroidissement (1), le corps de refroidissement (1) étant conçu pour recevoir l'ensemble de bobines (S) de la partie primaire, et le corps de refroidissement (1) étant conçu comme un composant formé d'une seule pièce, dans lequel se trouve un agent de refroidissement et dans lequel s'étendent des canaux (42) pour l'agent de refroidissement, qui servent à conduire un agent de refroidissement admis dans le corps de refroidissement (1) le long de l'ensemble de bobines (S), une section de fixation (12) circonférentiel s'étendant le long du bord extérieur (11) étant formée sur le corps de refroidissement (1),
**caractérisé en ce que**
**en ce que** la section de fixation (12) définit deux zones d'appui (14) opposées l'une à l'autre pour l'application d'une plaque de fermeture (6, 7) respective, qui sont formées chacune par une étape d'une zone d'extrémité étagée (14, 15, 16) de la section de fixation (12) de telle sorte que, lorsqu'une plaque de fermeture (6, 7) est disposée comme prévu sur la zone d'appui (14) respective de la section de fixation (12), un espace délimité par le corps de refroidissement (1) et les plaques de fermeture (6, 7) est formé, dans lequel l'ensemble de bobines (S) doit être reçu, les plaques de fermeture (6, 7) ne reposant pas seulement contre la surface d'appui (14) associée respectivement, mais sont également soutenues latéralement au niveau de la transition (15) vers l'étape suivante (16) de la section de fixation (12), et dans lequel les plaques de fermeture (6, 7) sont fixées par cohésion à la zone d'appui (14) respective de la section de fixation (12) de sorte que le corps de refroidissement (1) et les plaques de fermeture (6, 7) forment un espace scellé étanche aux gaz pour recevoir l'ensemble de bobines (S), dans lequel l'ensemble de bobines (S) est isolé par rapport à l'environnement et aucun dégazage ne peut s'échapper dans l'environnement.

2. Corps de refroidissement selon l'une quelconque des revendications précédentes, **caractérisé en ce que** le corps de refroidissement (1) comprend au moins une entrée (25) et au moins une sortie (35) pour l'agent de refroidissement.

3. Corps de refroidissement selon la revendication 2, **caractérisé en ce que**, dans la zone de l'entrée (25) de l'agent de refroidissement et dans la zone de la sortie (35) de l'agent de refroidissement, un élément de raccordement (26, 36) est fixé par cohésion sur le corps de refroidissement (1), élément de raccordement par lequel une conduite d'alimentation pour l'agent de refroidissement ou une conduite d'évacuation pour l'agent de refroidissement peut être raccordée.

4. Corps de refroidissement selon la revendication 2 ou 3, **caractérisé en ce que** les canaux (41) commencent chacun par une première section d'extrémité perpendiculairement à une zone d'entrée (2) du corps de refroidissement (1) et débouchent par une deuxième section d'extrémité perpendiculairement dans une zone de sortie (3) du corps de refroidissement (1).

5. Corps de refroidissement selon l'une quelconque des revendications précédentes, **caractérisé en ce que** le corps de refroidissement (1) est fabriqué en une seule pièce par impression 3D.

6. Corps de refroidissement selon l'une quelconque des revendications précédentes, **caractérisé en ce que** le corps de refroidissement (1) est réalisé en métal.

7. Corps de refroidissement selon la revendication 6, **caractérisé en ce que** le corps de refroidissement (1) est réalisé en titane ou en acier inoxydable.

8. Corps de refroidissement selon l'une quelconque des revendications précédentes, **caractérisé en ce que** des éléments de fixation (5) pour fixer un ensemble de bobines (S) sur le corps de refroidissement (1) sont moulés intégralement sur le corps de refroidissement (1).

9. Corps de refroidissement selon l'une quelconque des revendications précédentes, **caractérisé en ce que** des régions de renforcement (45) du corps de refroidissement (1) s'étendent sur le corps de refroidissement (1), dans la zone entourée par la partie de fixation circonférentielle (12).

10. Corps de refroidissement selon la revendication 9, **caractérisé en ce que** la plaque de fermeture respective (6, 7) s'appuie sur les zones de renforcement (45) et est fixée à celles-ci par cohésion.

11. Corps de refroidissement selon l'une quelconque des revendications précédentes, **caractérisé en ce que** la plaque de fermeture respective (6, 7) est fixée au corps de refroidissement (1) par soudage.

12. Corps de refroidissement selon l'une quelconque des revendications précédentes, **caractérisé en ce que** la plaque de fermeture respective (6, 7) est réalisée en métal.

13. Moteur linéaire avec une partie primaire, qui comprend un ensemble de bobines (S) avec au moins une bobine destinée à être alimentée en courant pendant le fonctionnement du moteur linéaire, et qui comprend en outre un corps de refroidissement selon l'une quelconque des revendications précédentes, sur lequel l'ensemble de bobines (S) est fixé de manière à être reçu dans un espace délimité par le corps de refroidissement (1) et les plaques de fermeture (6, 7).
